# DEMANDE DE BREVET EUROPEEN

(11) **EP 0 927 905 A1**
(43) Date de publication de la demande: **07.07.1999**
(21) Numéro de dépôt: 98403179.9
(22) Date de dépôt: 16.12.1998
(51) Int. Cl.: G02C 7/02, G02C 7/08

(54) **Dispositif optique destiné aux amblyopes**

(30) Priorité: 30.12.1997 FR 9716703
(71) Demandeur: Mouflin, Monique, 10000 Troyes (FR)
(72) Inventeur: Mouflin, Monique, 10000 Troyes (FR)
(74) Mandataire: Debay, Yves

(57) **Abrégé**

La présente invention concerne un dispositif optique destiné aux amblyopes caractérisé en ce qu'il est constitué d'au moins une lentille divergente disposée directement devant l'oeil et d'au moins une lentille convergente de grande taille en prisme de Fresnel disposée après ladite lentille divergente de manière à obtenir le grossissement voulu.

## Description

La présente invention concerne un dispositif optique destiné aux amblyopes.

L'amblyopie est caractérisée par un affaiblissement de la vue. Cette maladie ne peut pas être corrigée par une lentille classique car la fovéa des amblyopes est détériorée.

Pour résoudre le problème de vision des amblyopes, il est connu d'utiliser un système de Galilée composé d'une lentille classique d'objectif convergente et d'une lentille d'oculaire divergente. Mais, ces systèmes ont un champ visuel réduit car le grossissement utilisé est fort. De plus, le diamètre de la lentille classique convexe n'autorise qu'une très petite pupille de sortie, c'est-à-dire qu'il ne permet qu'à un petit faisceau de lumière de pénétrer dans l'oeil.

L'invention concerne plus particulièrement un système optique comportant une lentille divergente et une grande lentille de Fresnel adaptées au traitement des amblyopes.

L'emploi d'une lentille de type Fresnel est connu par le document WO 90 02963. Sur la surface d'une lentille de Fresnel, des facettes microscopiques sont moulées. Ladite lentille de Fresnel est introduite dans un système optique pour compenser la dispersion chromatique. En effet, elle concentre les rayons lumineux afin d'augmenter l'efficacité du système optique. Dans cette invention, la lentille de Fresnel n'est pas appliquée au traitement de l'amblyopie.

D'autre part, il est connu par le document WO 93 01583, un dispositif d'affichage d'images utilisé pour présenter des images générées électriquement. Ce dispositif comprend un casque, un écran et une lentille de Fresnel. La lentille de Fresnel est positionnée adjacente à l'écran de manière à ce que l'utilisateur puisse régler la mise au point des images sur l'écran. La lentille de Fresnel comporte une série d'anneaux convergents. Les courbures de cette lentille minimisent les déformations de l'image liées à la proximité de l'écran. Ce dispositif comporte également une lentille de type Fresnel mais ne résoud absolument pas le problème des amblyopes.

Il est connu par le document FR 2623921 une lentille ophtalmique multifocale progressive dont l'épaisseur est réduite à la fois à sa périphérie et dans sa partie centrale. Une des surfaces de cette lentille est formée comme la surface d'une lentille de Fresnel par composition d'échelons microscopiques. Mais, ces lunettes ne sont pas utilisées pour des patients atteints d'amblyopie mais pour des patients atteints de presbytie désirant porter des lunettes dans lesquelles il n'y a pas de frontière distincte entre la partie pour la vision de loin et la partie pour la vision de près. Le problème résolu par ce type de lentille ne concerne pas le problème des amblyopes.

Un premier but de l'invention est de trouver un dispositif optique adapté au problème de vision des amblyopes.

Ce but est atteint par le fait qu'au moins une lentille divergente est disposée directement devant l'oeil et qu'au moins une grande lentille convergente en prisme de Fresnel est disposée après ladite lentille divergente de manière à obtenir le grossissement voulu, pour avoir un plus grand faisceau de lumière pénétrant l'oeil et un champ de vision augmenté.

Selon une autre particularité de l'invention, le grossissement du dispositif varie entre 1,6 à 15 pour que ces lunettes puissent être adaptées à la vision de loin tout comme à la vision de près.

Selon une autre particularité de l'invention, le rapport du rayon de la cornée sur le rayon de la rétine est proportionnel au rapport de la distance rétine-cornée sur la distance rétine-lentille de Fresnel.

Un autre but de l'invention est de fournir un drageoir constitué d'un cadre supportant une lentille convergente en prisme de Fresnel et d'entretoises de maintien supérieures et inférieures, fixées au cadre d'une lunette supportant une lentille divergente.

Selon une autre particularité de l'invention, le drageoir est fixé au cadre d'une lunette par au moins une entretoise de maintien supérieure et une entretoise de maintien inférieure de manière à garder une distance fixe et un maintien solide entre le cadre de la lunette et le drageoir.

Selon une autre particularité de l'invention, une patte de fixation située à l'extrémité de chaque entretoise de maintien est soudée au cadre d'une lunette.

Selon une autre particularité de l'invention, le drageoir est fixé amovible à une lunette par un ensemble de vis.

D'autres particularités et avantages de la présente invention apparaîtront plus clairement à la lecture de la description ci-après faite en référence aux dessins annexés dans lesquels :
- la figure 1 représente une vue schématique du dispositif optique,
- la figure 2 représente une autre vue schématique du dispositif optique,
- la figure 3 représente une vue de côté d'une lentille convexe en prisme de Fresnel,
- la figure 4 représente une vue de face d'une lentille convexe en prisme de Fresnel,
- la figure 5 représente une vue en perspective d'un drageoir monoculaire,
- la figure 6 représente une vue en perspective, schématique, d'un drageoir monoculaire fixé au cadre d'une lunette,
- la figure 7 représente une vue de côté d'un drageoir fixé au cadre d'une lunette,
- la figure 8 représente une vue de dessus d'un drageoir fixé au cadre d'une lunette.

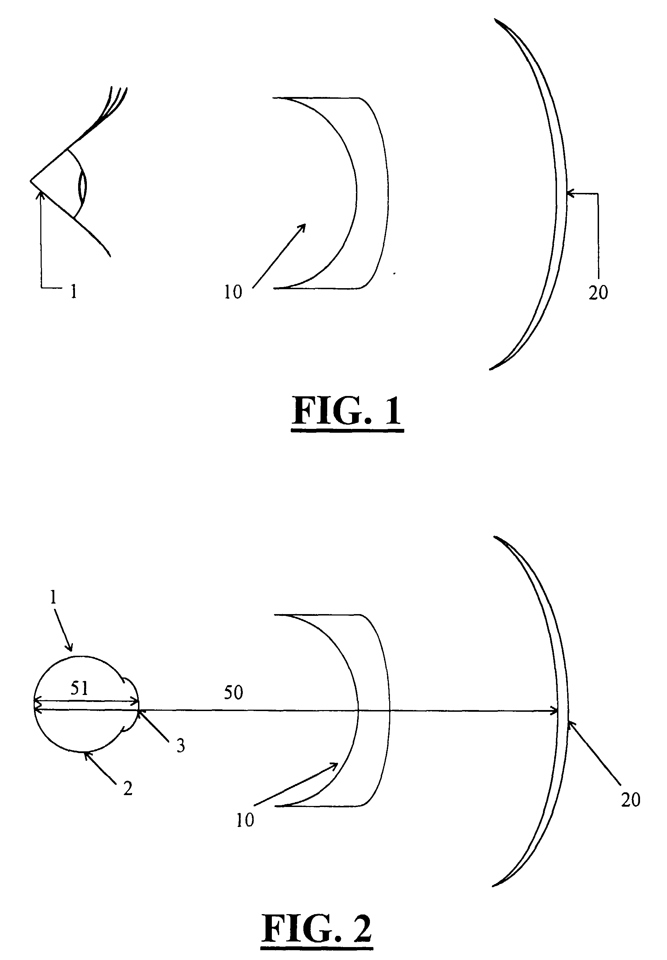

La figure 1 représente une vue schématique du dispositif optique comportant pour chaque oeil (1) une lentille divergente (10) disposée directement devant l'oeil (1), et d'une grande lentille convergente en prisme de Fresnel (20) disposée à la suite de la lentille divergente (10) à une distance déterminée. Ces deux lentilles doivent être bien centrées. La lentille convexe de Fresnel (20) doit être de grande taille surtout sur son axe horizontal pour qu'un plus grand faisceau de lumière pénétre dans l'oeil. Ainsi, le champ de vision du patient est augmenté.

La figure 2 représente une autre vue schématique du dispositif optique sur lequel la référence (51) représente la distance entre la rétine (2) et la cornée (3) et la référence (50) représente la distance entre la rétine (2) et la lentille de Fresnel (20). Selon un mode de réalisation de l'invention, le rapport du rayon de la cornée (3) sur le rayon de la rétine (2) est proportionnel à la distance (51) entre la rétine (2) et la cornée (3) sur la distance (50) entre la rétine (2) et la lentille de Fresnel (20). De cette façon, plus on s'éloigne de l'oeil, plus les lentilles utilisées doivent être cambrées.

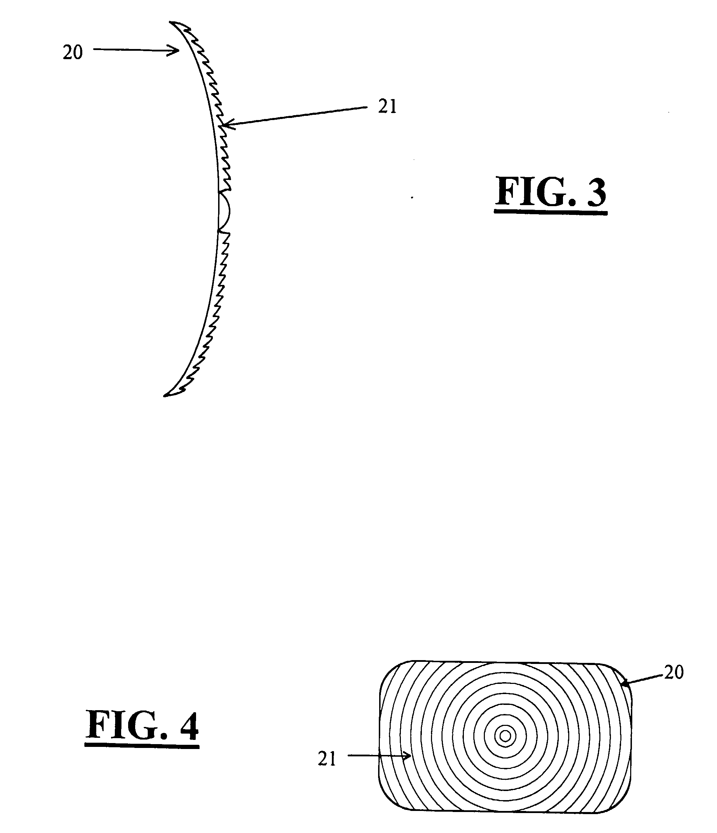

Les figures 3 et 4 représentent une vue de côté et une vue de face d'une lentille convexe en prisme de Fresnel (20). La lentille de Fresnel présente sur sa surface extérieure une série d'anneaux (21) formés par des discontinuités concentriques.

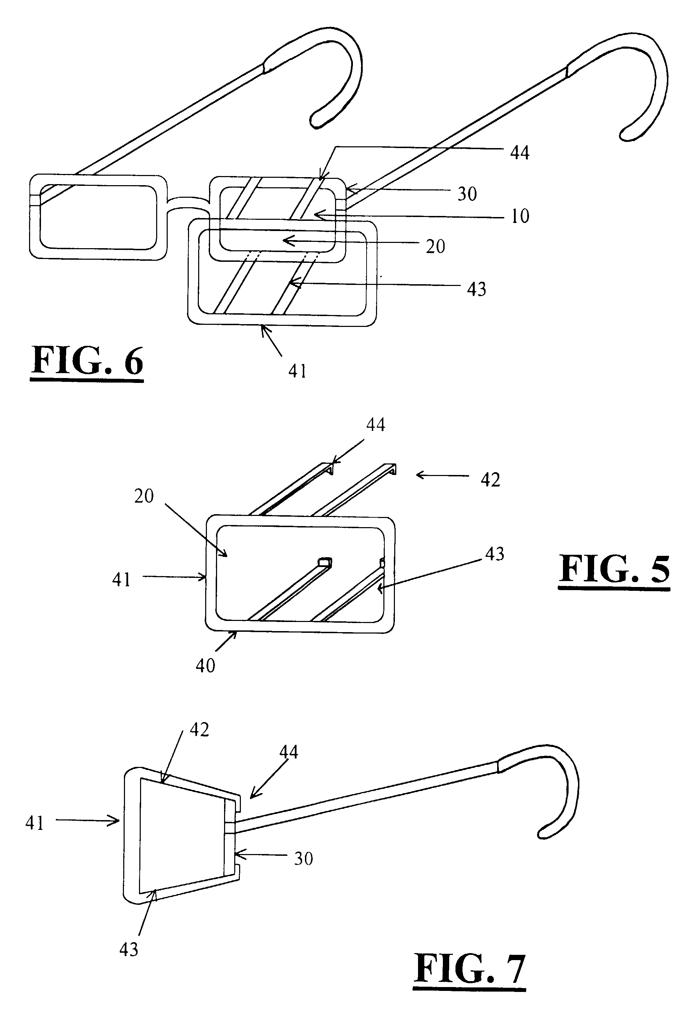

La figure 5 représente une vue en perspective d'un drageoir monoculaire (40). Ce drageoir (40) est constitué d'un cadre (41) métallique, plastique ou de tout autre matière, d'une grande lentille convergente de type Fresnel (20), de deux entretoises de maintien supérieures (42) et de deux entretoises de maintien inférieures (43). Les entretoises de maintien (42, 43) comportent à leur extrémité une patte de fixation (44). Selon un mode de fixation d'un drageoir au cadre d'une lunette, les pattes de fixation (44) du drageoir (40) sont soudées au cadre (30) de la lunette. Selon un autre mode de fixation, les pattes de fixation (44) du drageoir (40) sont fixées au cadre (30) de la lunette par un ensemble de vis de sorte que le drageoir soit amovible.

La figure 6 représente une vue en perspective, schématique, d'un drageoir monoculaire (40) solidement fixé au cadre (30) d'une lunette. Bien entendu, des drageoirs binoculaires peuvent aussi être prévus, dans ce cas, deux drageoirs (40) reliés par une bride sont fixés à une paire de lunettes.

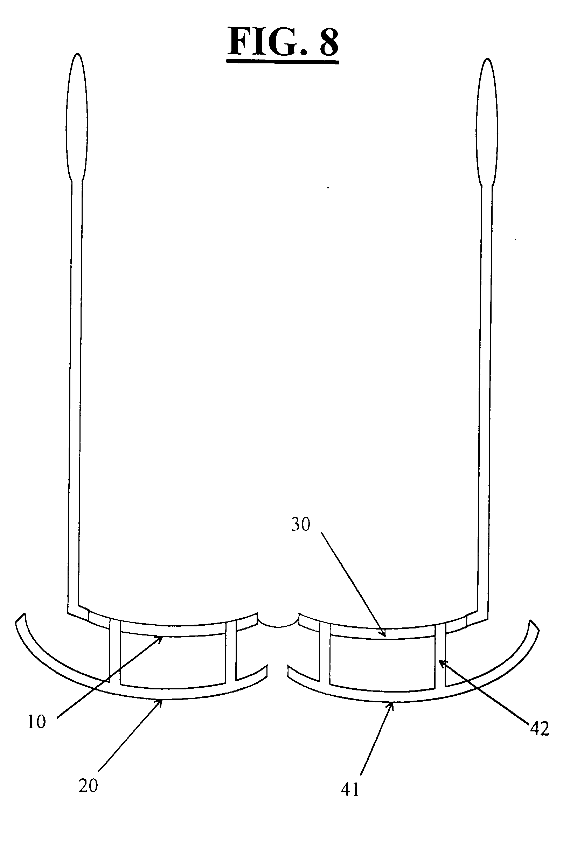

Les figures 7 et 8 représentent une vue de côté et une vue de dessus d'un drageoir (40) dont les pattes de fixation (44) sont soudées au cadre d'une lunette (30).

La puissance du verre divergent (10) est fonction des amétropies de vision du patient et du grossissement souhaité. La distance entre la lentille divergente (10) et la lentille convergente de Fresnel (20) est fixe et fonction de la puissance des lentilles divergentes et de Fresnel utilisées et du grossissement souhaité.

Avantageusement, le grossissement utile du dispositif varie entre 1,6 et 15. Ainsi, ces lunettes pourront aussi servir de jumelle panoramique en vue de loin et de loupe binoculaire en vue de près pour les personnes n'ayant pas de problème d'amblyopie.

D'autres modifications à la portée de l'homme de métier font également partie de l'esprit de l'invention.

## Revendications

1. Dispositif optique destiné aux amblyopes caractérisé en ce qu'il est constitué d'au moins une lentille divergente (10) disposée directement devant l'oeil (1) et d'au moins une lentille convergente (20) de grande taille en prisme de Fresnel disposée après ladite lentille divergente (10) de manière à obtenir le grossissement voulu, pour avoir un plus grand faisceau de lumière pénétrant l'oeil et un champ de vision augmenté.

2. Dispositif optique selon la revendication 1, caractérisé en ce que le grossissement utile du dispositif varie entre 1,6 et 15.

3. Dispositif optique selon la revendication 1, caractérisé en ce que le rapport du rayon de la cornée sur le rayon de la rétine est proportionnel au rapport de la distance rétine-cornée sur la distance rétine-lentille de Fresnel.

4. Dispositif optique selon la revendication 1, caractérisé en ce qu'un drageoir (40) constitué d'un cadre (41) supportant une grande lentille convergente (20) en prisme de Fresnel, d'entretoises de maintien supérieures (42) et inférieures (43) est fixé au cadre (30) d'une lunette, ledit cadre (30) supportant une lentille divergente (10).

5. Dispositif optique selon la revendication 4, caractérisé en ce que le drageoir (40) est fixé au cadre (30) d'une lunette par au moins une entretoise de maintien supérieure (42) et une entretoise de maintien inférieure (43) de manière à garder une distance fixe et un maintien solide entre le cadre (30) de la lunette et le drageoir (40).

6. Dispositif optique selon la revendication 4, caractérisé en ce qu'une patte de fixation (44) située à l'extrémité de chaque entretoise de maintien est soudée au cadre (30) d'une lunette.

7. Dispositif optique selon la revendication 4, caractérisé en ce que ledit drageoir (40) est fixé amovible à ladite lunette (30) par un ensemble de vis.
